# EUROPEAN PATENT APPLICATION

(11) **EP 1 310 149 A1**
(43) Date of publication of application: **14.05.2003**
(21) Application number: 02257783.7
(22) Date of filing: 11.11.2002
(51) Int. Cl.: A01D 43/10

(54) **Crop conditioner machine**

(30) Priority: 09.11.2001 GB 0126959
(71) Applicant: Kverneland ASA, 4344 Kvernaland (NO)
(72) Inventor: Aarenstrup, Hendrik Christensen, 5300 Kerteminde (DK)
(74) Representative: Orr, William McLean

(57) **Abstract**

A conditioner machine (10) for conditioning a harvested standing crop lying on the ground and which comprises: a housing (11); a rotary conditioner device (12) mounted on the housing (11) with its axis of rotation extending transversely of the direction of forward travel of the machine, and which is operative to apply upward and rearward movement to a crop supplied thereto, and to apply a working action on the crop; means (13) provided on the housing (11) forwardly of the conditioner device (12), and operative to guide a crop to the conditioner device (12); and a deflector guide (14) arranged rearwardly of the conditioner device (12) and cooperative with the housing (11) in order to guide a moving stream (15) of conditioned crop issuing from the conditioner device (12), in which: the deflector guide (14) extends transversely of the direction of travel and has at least a pair of first and second guide surfaces (17, 18); the guide (14) is adjustable between two guiding positions, in one of which positions the first guide surface (17) faces downwardly to exert a downward guiding force on the stream (15) of conditioned crop, and in the other of which positions the second guide surface (18) faces downwardly to exert a downward guiding force on the stream (15) of conditioned crop; and at least one of said guide surfaces (17, 18) is provided with guide vanes (19) which project from the guide surface so as to exert transversely extending guide forces to the stream (15) of conditioned crop.

## Description

This invention relates to a crop conditioner machine for conditioning a harvested standing crop lying on the ground, such as mown grass.

As is well known, grass conditioners are used in order to carry out a working action on a mown crop of grass, and then to direct the conditioned crop to fall as a swath on the ground to the rear of the conditioner. The working action helps to dry the crop, and which is followed by a substantially uniform distribution of the conditioned crop on the ground as a swath, whereby any required further drying may take place, before the crop is picked-up and then formed into bales, or chopped.

By way of example only, and as background to the invention, description will now be made of the conditioning of mown grass. It should be understood, however, that the invention is applicable to the conditioning of other types of harvested standing crop than grass, when lying on the ground.

When grass is being mown so as to form silage, conditioning and partial drying only takes place so as to reduce the water content, and the crop is then formed into bales which are subsequently wrapped with stretch film wrapping, so that fermentation of the crop can take place within the wrapping in order to form silage.

The distribution of the conditioned crop onto the ground as a swath is carried out by providing swath plates or guides which engage the stream of conditioned crop, as it is conveyed upwardly and rearwardly by the conditioner. A conditioner typically comprises a rotor which extends perpendicular to the direction of forward travel and which is provided with outwardly extending tines or fingers which lift the mown crop and then exert a working action on the crop as they move the crop upwardly and rearwardly.

The working action tends to break or bruise the surface of individual blades of grass, and which then allows internal juices to escape and therefore promote the drying, or partial drying of the crop which is required.

Swath plates can therefore guide the stream of conditioned crop so as to form a swath of any required width, and at a required deposition zone behind and/or to one side of the rear of the conditioner.

Frequently, a grass conditioner also incorporates a mower unit, so that a combined mower/conditioner machine is provided. However, it should be understood that the invention is applicable both to combined mower/conditioner machines, and also to conditioner machines alone, in which a separate mower machine e.g. a multi-disc mower, first mows the crop and distributes the mown crop onto the ground, and which is subsequently picked up and conditioned by a separate conditioner machine.

One type of swath plate in common use involves use of one or more vertical or near vertical guide plates which engage the stream of conditioned crop issuing from the conditioner and guides or condenses the stream to form a swath of required width and location.

A further type of swath plate is known as a "horizontal deflector" (although it is not strictly "horizontal" in attitude in normal use), and which acts downwardly onto the moving stream of conditioned crop i.e. is located in the path of the stream and then directs the stream downwardly and also laterally if required.

Horizontal deflectors are often used with conditioners which have a transversely extending swath belt, and direct the stream of conditioned crop onto the belt and which then transfers the crop onto the ground as a swath.

The present invention is concerned generally with a "horizontal" type deflector, and seeks to provide improved means of adjustment of the deflector which enables different swath size and distribution to be obtained when required, by relatively simple manipulation of crop-guiding components of the deflector.

According to the invention there is provided a conditioner machine for conditioning a harvested standing crop lying on the ground and which comprises:
a housing;
a rotary conditioner device mounted on the housing with its axis of rotation extending transversely of the direction of forward travel of the machine, and which is operative to apply upward and rearward movement to a crop supplied thereto and to apply a working action on the crop;
means provided on the housing forwardly of the conditioner device and operative to guide the crop to the conditioner device; and
a deflector guide arranged rearwardly of the conditioner device and cooperative with the housing in order to guide a moving stream of conditioned crop issuing from the conditioner device, in which:
   the deflector guide extends transversely of the direction of travel and has at least a pair of first and second guide surfaces;
   the guide is adjustable between two guiding positions, in one of which the first guide surface faces downwardly to exert a downward guiding force on the stream of conditioned crop, and in the other of which guiding positions the second guide surface faces downwardly to exert a downward guiding force on the conditioned crop; and
   at least one of said first and second guide surfaces is provided with guide vanes which project from the guide surface so as to exert transversely extending guide forces to the stream of conditioned crop.

Preferably, the deflector guide is pivotally adjustably mounted on the housing, and a pivot axis therefore may be provided on or in the housing which extends generally perpendicular to the direction of travel, and about which the deflector guide is pivotable.

Conveniently, the pivot axis extends approximately midway between the leading and trailing edges of the deflector guide.

The deflector guide is preferably of plate-like construction, preferably hollow, and has a common actuator mounted on or in the guide and which is coupled with at least some of the guide vanes for joint actuation thereof.

A vane-actuating mechanism may be housed within the hollow structure.

The invention may be applied to a conditioner machine alone, in which case suitable guide and/or pick-up means may be mounted on the housing forwardly of the conditioner device, e.g. to feed a mown crop thereto, such crop having been cut by a separate mowing machine e.g. a multi-disk mower. However, the invention may also be applied to a combined mower/conditioner machine, in which case a mowing unit is mounted in the housing forwardly of the conditioner device.

A preferred embodiment of grass conditioner machine according to the invention will now be described in detail, by way of example only, with reference to the accompanying drawings, in which:
Figure 1 is a diagrammatic side view illustration of the component parts of the machine, and showing the working action applied to a mown crop in order to "condition" the crop and then return it to the ground in the form of a swath of required width and location (via a swath belt);
Figure 2 is a schematic plan view illustration showing the guiding of a stream of conditioned crop in a direction rearwardly and/or laterally of the machine (in Figure 2 there is shown laterally outward guiding or "spreading", rather than "condensing" to form a swath);
Figure 3 is a detailed view of a deflector guide for mounting on the machine, and which is operative to guide the stream of conditioned crop;
Figure 4 is a side perspective illustration showing in more detail a practical embodiment of conditioner machine;
Figure 5 is a similar view to Figure 4, but also partly viewed from the rear as well as the side;
Figure 6 is a side illustration of the practical embodiment and showing the deflector guide in one of two possible guiding positions; and
Figure 7 is a view, similar to Figure 6, but showing an alternative guiding position of the deflector guide.

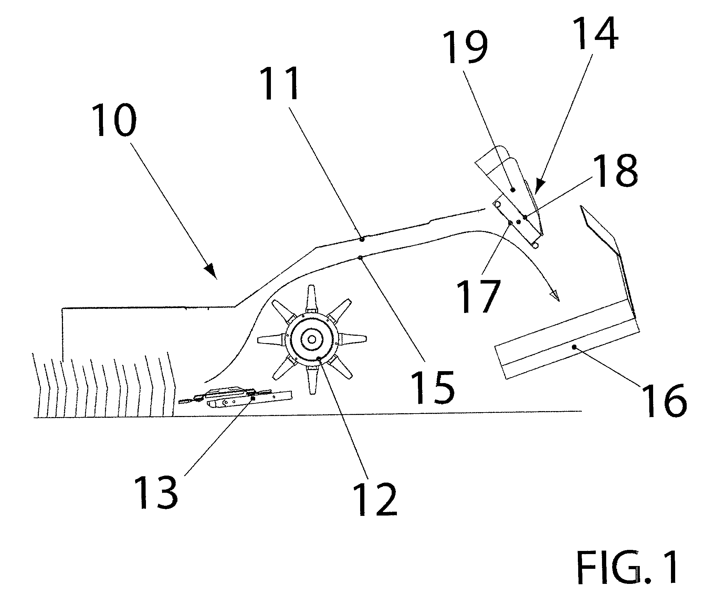

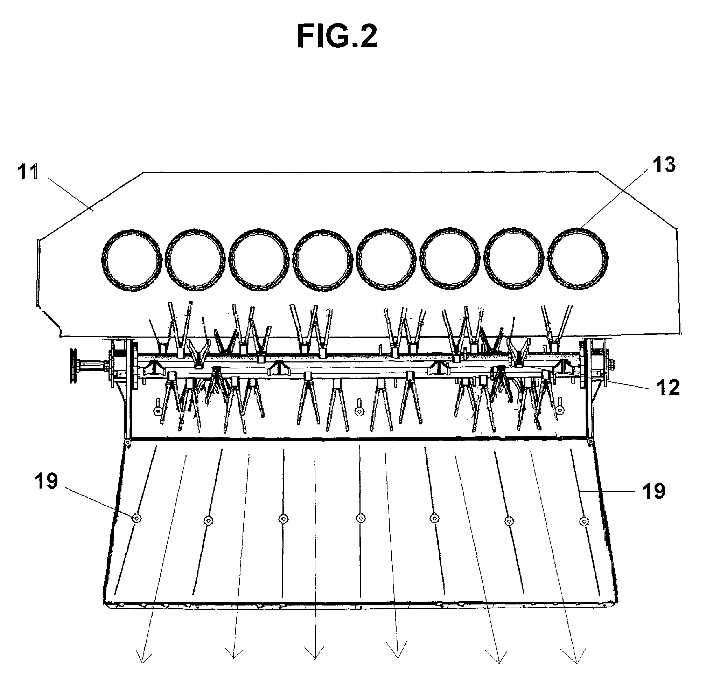

Referring first to Figures 1 to 3 of the drawings, a grass conditioner machine according to the invention is designated generally by reference 10, and has a housing 11, and a rotary grass conditioner device 12 mounted on the housing 11 with its axis of rotation extending transversely of the direction of forward travel of the machine. The device 12 is operative to apply upward and rearward movement to a mown crop of grass supplied thereto, and to apply a working action on the crop. Means is provided on the housing forwardly of the conditioner device 12, and which is operative to guide a mown crop to the conditioner device 12. In the illustrated embodiment, such means is provided by means of a multi-disc mower unit 13, which may take any one of well known forms.

However, it should be understood that the invention is applicable to a conditioner machine alone, in which a separate mower is used first to cut the grass and then deposit it on the ground, and the conditioner machine then is towed across the field and then picks up the mown crop, applies a conditioning action to the crop, and then discharges the conditioned crop into a swath of required size, shape and location, by means of suitable deflector guides mounted on the rear of the housing 11, and as will be described in more detail below.

Thus, a deflector guide 14 is arranged rearwardly of the conditioner device 12, and cooperates with the housing 11 in order to guide a moving stream 15 of conditioned crop which issues from the conditioning device 12. In the illustrated embodiment, the deflector guide 14 directs the stream 15 downwardly onto a transversely extending swath belt 16. However, it should be understood that it is not essential to provide swath belt 16, and the rearward and/or transverse guidance of the conditioned crop stream may be directly onto the ground from the deflector guide 14.

As can be seen from Figures 1 to 3, the deflector guide 14 extends transversely of the direction of travel and has a pair of opposed first and second guide surfaces 17 and 18. However, more than two guide surfaces may be provided if required e.g. the guide may be triangular in cross-section with three guide surfaces, and be adjustable to present any one of these surfaces to face downwardly and engage the conditioned crop stream. Also, the guide 14 is adjustable between two guiding positions, in one of which the first guide surface 17 faces downwardly to exert a downward guiding force on the stream of conditioned crop 15, and in the other of which guiding positions the second guide surface 18 faces downwardly to exert a downward guiding force on the conditioned crop stream 15.

Finally, at least one of the guide surfaces 17, 18 is provided with guide vanes 19 which project from the guide surface concerned, and which are operative to exert transversely extending guide forces on the stream of conditioned crop.

Figures 1 to 3 are schematic illustrations of the crop guiding components of the conditioning machine 10, and which can readily be adjusted by simple manipulation, when it is required to adjust the size, shape and distribution of the swath which is to be deposited on the ground.

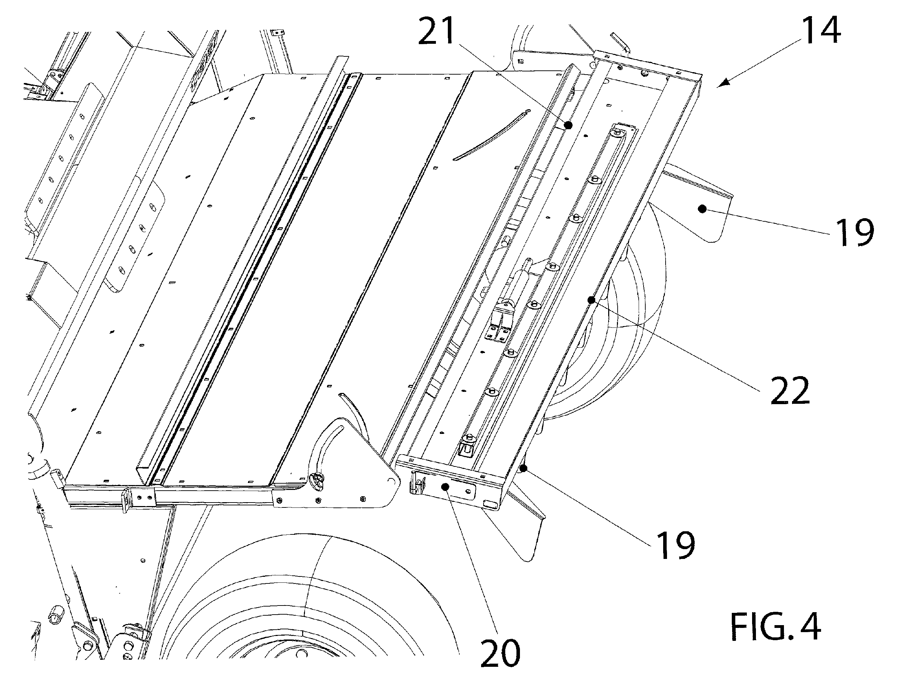

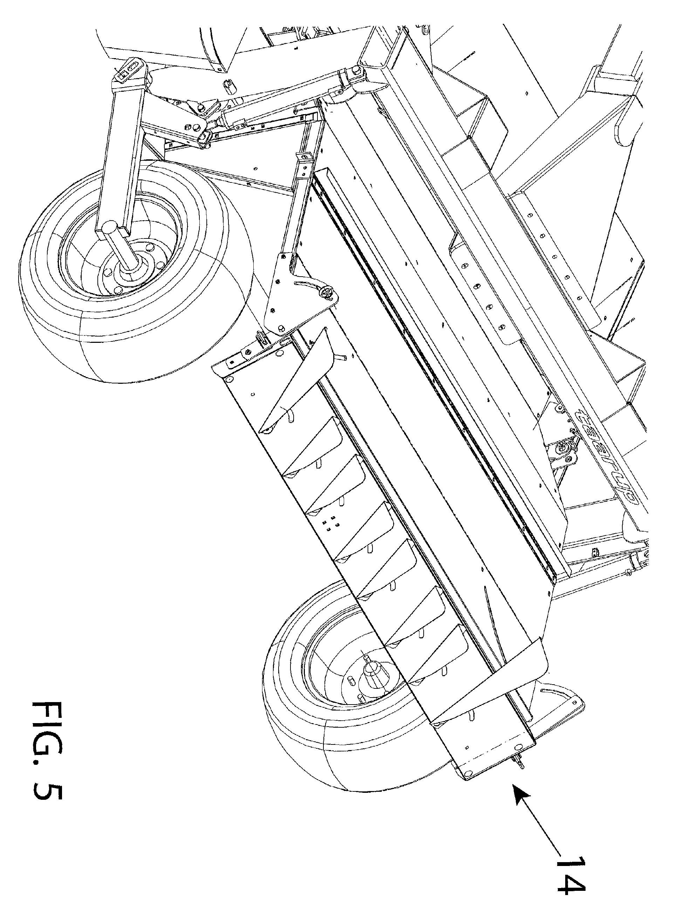

Figures 4 to 7 illustrate in more detail a practical embodiment of the invention, and parts corresponding with those already described are given the same reference numerals.

It should be noted in particular that the deflector guide 14 is pivotally adjustably mounted on the housing 11, and a generally perpendicularly extending axis 20 is provided, which extends approximately midway between the leading and trailing edges 21 and 22 of the deflector guide 14.

Also, the deflector guide 14 is of plate-like hollow construction, and has a common actuator 23 mounted on or in the hollow structure, and which is coupled with at least some of the guide vanes 19 for joint actuation thereof.

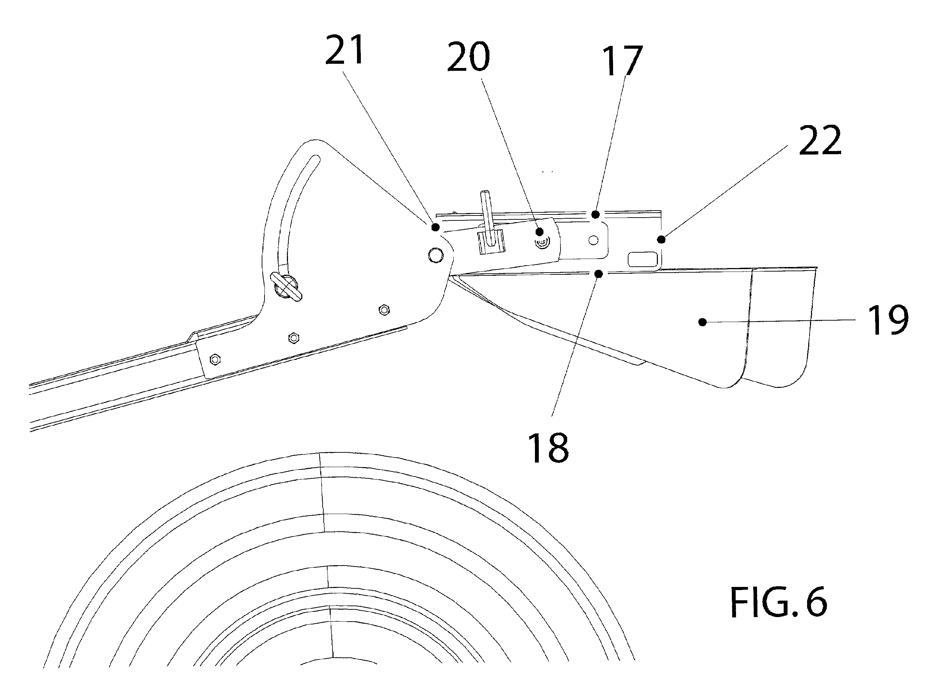

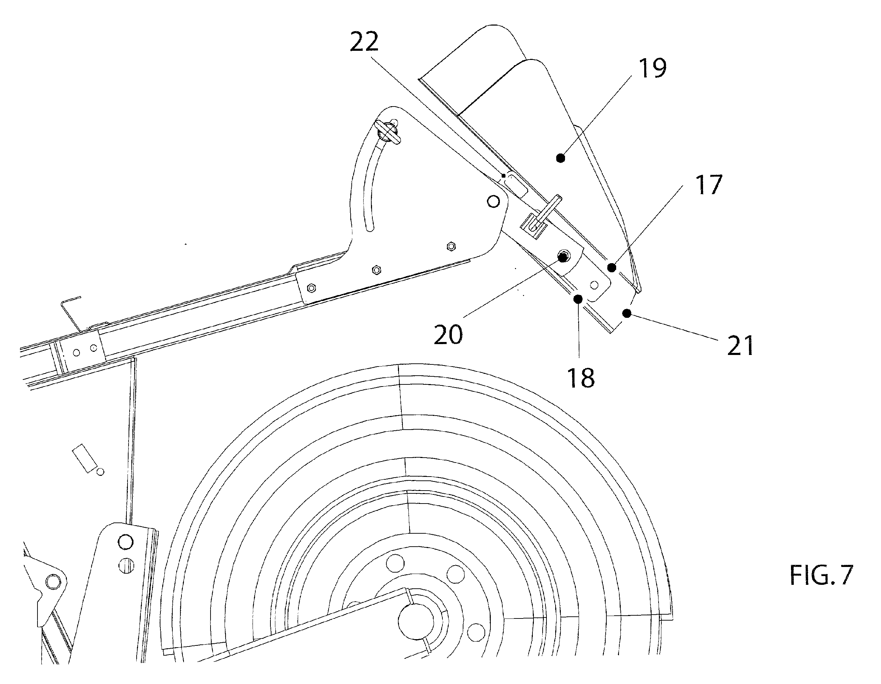

Figure 6 shows the deflector guide 14 occupying one working or guiding position, in which the guide surface 18 faces downwardly, whereas Figure 7 shows pivotable adjustment through slightly less than 180°, whereby guide surface 17 faces downwardly.

Therefore, the illustrated embodiments provide a deflector guide having two opposed guide surfaces, which can apply different types of guiding action as may be required, and there is also at least one set of guide vanes provided on at least one of the guide surfaces, and which have the function of exerting transversely extending guiding forces on the stream of conditioned crop, whereby to control the lateral discharge of the crop, and also to condense the crop into a narrower swath if required.

Therefore, the embodiments of the invention provide a simple design, which is easy to adjust and which allows a quick change of swath pattern to be achieved when required. The deflector guide is substantially horizontal, and has at least two working surfaces, and at least of these working surfaces has adjustable vanes/guiding strips. The choice of particular working/guide surface to be used is easily achieved by pivoting the deflector guide about an axis extending parallel to the ground and perpendicular to the working direction. The turning axis is preferably located approximately in the middle of the deflector guide.

As a preferred alternative, or additional feature, the angle of the deflector guide may be adjusted in relation to the ground.

Also, the deflector guide may comprise two or more separate guide components, spaced apart from each other, and each having the opposed guide surfaces just described.

The vanes may be adjustable individually, or in groups of vanes for common actuation.

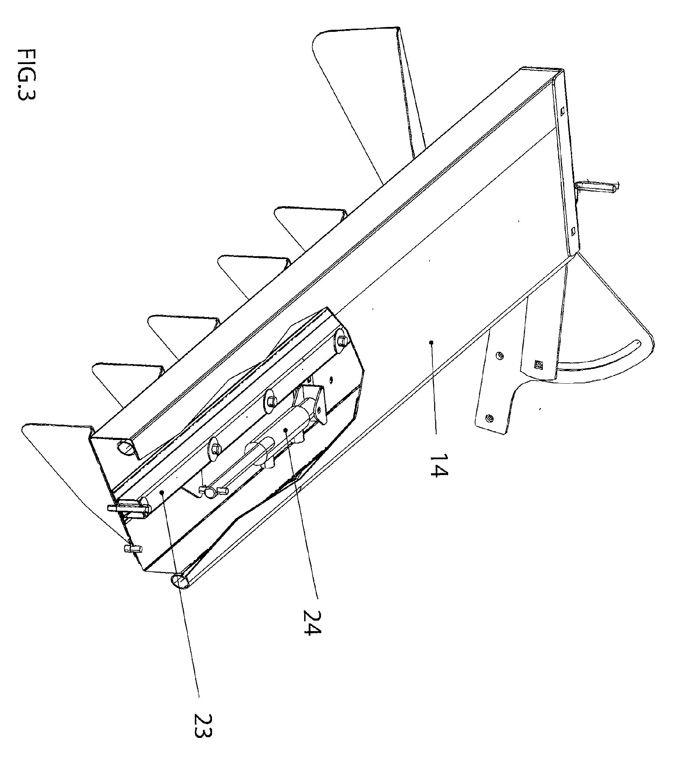

An actuation mechanism 24 to adjust the vanes is located internally of the deflector guide (see Fig. 3), when it is hollow, and therefore between the spaced apart working or guiding surfaces.

If required, an automatic adjustment mechanism (not shown) may be provided which is coupled with the drawbar of a tractor pulling the machine, and which responds to angular adjustment of the drawbar to provide automatic compensating adjustment of the vane angles to vary the deposition of conditioned crop accordingly.

While the embodiment of the invention has been described and illustrated in the conditioning of mown grass, it should be understood that the invention is also applicable to the conditioning of other types of harvested crops, lying on the ground.

## Claims

1. A conditioner machine (10) for conditioning a harvested standing crop lying on the ground and which comprises:
a housing (11);
a rotary conditioner device (12) mounted on the housing (11) with its axis of rotation extending transversely of the direction of forward travel of the machine, and which is operative to apply upward and rearward movement to a crop supplied thereto, and to apply a working action on the crop;
means (13) provided on the housing (11) forwardly of the conditioner device (12), and operative to guide a crop to the conditioner device (12); and
a deflector guide (14) arranged rearwardly of the conditioner device (12) and cooperative with the housing (11) in order to guide a moving stream (15) of conditioned crop issuing from the conditioner device (12), in which:
the deflector guide (14) extends transversely of the direction of travel and has at least a pair of first and second guide surfaces (17, 18);
the guide (14) is adjustable between at least two guiding positions, in one of which positions the first guide surface (17) faces downwardly to exert a downward guiding force on the stream (15) of conditioned crop, and in the other of which positions the second guide surface (18) faces downwardly to exert a downward guiding force on the stream (15) of conditioned crop; and
at least one of said guide surfaces (17, 18) is provided with guide vanes (19) which project from the guide surface so as to exert transversely extending guide forces to the stream (15) of conditioned crop.

2. A machine according to claim 1, in which the deflector guide (14) is pivotally adjustably mounted (20) on the housing (11).

3. A machine according to claim 2, in which the deflector guide (14) is pivotable about an axis (20) extending generally perpendicular to the direction of travel.

4. A machine according to claim 3, in which the pivot axis (20) extends approximately mid-way between the leading and trailing edges (21, 22) of the deflector guide (14).

5. A machine according to any one of the preceding claims, in which the deflector guide (14) is plate-like and has a common actuator (23) mounted on or in the guide (14) and which is coupled with at least some of the guide vanes (19) for joint actuation thereof.

6. A machine according to claim 5, in which the plate-like deflector guide (14) is hollow, and a vane-actuating mechanism (24) is housed within the hollow structure.

7. A machine according to any one of the preceding claims, in which a disc mower unit is mounted in the housing (11), and located forwardly of the rotary conditioner device (12).

8. A machine according to any one of the preceding claims, in which the deflector guide (14) has more than two guide surfaces.

9. A machine according to any one of the preceding claims, including an automatic adjustment mechanism to be coupled with a drawbar pulling the machine, and which is responsive to angular adjustment of the drawbar to provide automatic compensating adjustment of the vane angles to vary the deposition of conditioned crop accordingly.

10. A machine according to any one of the preceding claims and comprising a grass conditioning machine.
